# EUROPEAN PATENT APPLICATION

(11) **EP 4 813 797 A1**
(43) Date of publication of application: **30.09.2026**
(21) Application number: 26161798.9
(22) Date of filing: 02.03.2026
(51) Int. Cl.: B62B 3/00, B62B 3/14, B62B 5/00, B62B 5/06, B68C 1/00

(54) **TACK LOCKER WITH A FRAME**

(30) Priority: 05.03.2025 PL 45140325
(71) Applicant: PRZEDSIEBIORSTWO HANDLOWO USLUGOWE MARKO - SERWIS NOWAK I WSPÓLNICY SPOLKA JAWNA, 71-637 Szczecin (PL)
(72) Inventor: RAFAL, Nowak, Dobra (PL); SEK, Radoslaw, Myszków (PL)
(74) Representative: Bukanska, Alicja

(57) **Abstract**

A riding tack locker comprising a storage part consisting of at least one functional compartment for riding equipment, characterized in that it comprises a control means, and the storage part is mounted on a frame consisting of interconnected profiles forming a frame truss (1), wherein the frame comprises a rear axle (2) with a drive means (21) and a front axle (3), wherein each of the axles has two wheels (4), referred to as rear wheels (41) and front wheels (42), wherein the front axle (3) of the frame (1) comprising a stationary skeleton (5) and a wheel steering assembly transmitting a rotation signal of the front wheels (42) from the locker control means to pushrods (10) of the front axle (3), wherein the stationary skeleton (5) is constructed of a set of profiles interconnected with each other and with the frame truss (1) forming a supporting structure of the front axle (3), while one end of each pushrod (10) is pivotally connected to a steering knuckle arm (111) on which front hubs (421) of the front wheels (42) are mounted, and the second end of each pushrod (10) is pivotally connected to the steering assembly.

## Description

The subject of the invention is a riding tack locker with a frame, wherein the tack locker is used for storing and transporting equipment and accessories used in horse riding.

Manual riding tack lockers are known from CN207679141U, CN221730099U, and US2017341923A1, constructed of multi-functional compartments mounted on wheels.

Also known is the HussariaElectra riding tack locker with an electric drive (https://electra.hussaria.pl/pl/ as of Feb 6, 2025), which, like known lockers, has a functional compartment on wheels for storing riding accessories.

In the known solutions, riding tack lockers are equipped with integral wheels allowing for the movement of the lockers.

The utility model protection description Ru.069918 discloses a cabinet for riding equipment intended for use in stud farms as well as for transporting riding equipment to equestrian events. The cabinet is constructed of a rectangular body mounted on travel wheels equipped with a brake, which is closed at the front by several doors, and inside which transverse and longitudinal partitions are located, defining recesses of various sizes. The cabinet body has a modular form, in which rectangular modules, separable by sides, are joined together with locks, and in the bottom of one module, a support is pivotally mounted, the position of which is blocked each time by a bolt latch attached to it.

The technical problem to be solved is a construction of a frame with a control means and a wheel steering assembly, which will facilitate steering the tack locker, especially over uneven terrain, and in particular, the construction of a steering axis allowing for the replacement of steering wheels widely used in riding tack lockers. Furthermore, the technical problem to be solved is the construction of a tack locker with a frame equipped with an electric drive that will assist in its guidance and facilitate its use.

The riding tack locker comprising a storage part consisting of at least one functional compartment for riding equipment. The riding tack locker has a control means, and the storage part is mounted on a frame comprises an interconnected profiles, preferably aluminum or steel. These profiles are interconnected preferably by means of welding, forming a frame truss.

The frame has a rear axle with a drive means, preferably an electric motor mounted to the frame, permanently integrated with a transmission and a differential. The electric motor is mounted to the frame truss by means of bent sheet metal elements. The frame also comprises a front axle. Each of the axles has two rear hubs and two front hubs with frame wheels mounted thereon, referred to as rear wheels and front wheels, respectively. The rear wheel hub is mounted on the electric motor shaft. In contrast, the front hub of the front axle is mounted on a steering knuckle, wherein each of the mentioned steering knuckles of the front axle is journaled in at least one place of a bracket of the front axle skeleton beam. The rotation of the steering knuckle, and subsequently the front wheels, is caused by displacement of the steering knuckle arm by means of a pushrod.

The front axle has the above-mentioned stationary skeleton comprising, among others, a beam terminated at both ends with brackets for the front wheel steering knuckles. The skeleton forms a supporting structure of the front axle for its remaining elements. The front axle of the frame also has a wheel steering assembly transmitting movement by means of pushrods to the front wheel steering knuckles. One end of each pushrod is pivotally connected to the steering knuckle arm on which the front wheel front hubs are mounted, and the second end of each pushrod is pivotally connected to the steering assembly.

The steering assembly has been presented in two embodiments for an electric riding tack locker controlled manually or controlled remotely, preferably by means of a radio signal. Both embodiments of the riding tack locker can also operate in a semi-autonomous version with a control assembly constructed of at least one digital camera and at least one distance sensor. Preferably, the semi-autonomous example has two digital cameras, one for the front and one for the rear of the riding tack locker frame, and eight ultrasonic distance sensors arranged two on each outer profile of the rectangular frame.

The steering assembly according to the first embodiment of the tack locker is a profile on the front axle skeleton beam. The profile is located between the front wheels of the front axle such that the profile is connected to the skeleton beam by means of a mounting pin journaled in at least one place between the skeleton and the profile. The control means is a handle journaled in the front axle profile. The second end of each pushrod is pivotally connected to the pins of the profile such that the movement of the handle causes rotation on the mounting pin of the profile relative to the front axle skeleton beam, which in turn leads to the rotation of the front wheels through the pushrods connecting the profile with the front wheel steering knuckle arm.

The steering knuckle arms have their specific length, and the rotation of the handle by a given angle by the user does not correspond to the rotation angle of the steering knuckles; preferably, the rotation angle of the front wheels is greater than the angle set by the user with the handle.

The frame handle is a profile constructed of interconnected elements, referred to as a control profile, a connecting profile, and a handlebar, such that the connecting profile constitutes a link between the control profile and the front axle profile. Between the connecting profile and the control profile, there is at least a right angle, preferably an obtuse angle. The connecting profile of the handle is journaled in the front axle profile. Inside the handle profile, there are wires routed towards the frame, exiting through an opening at the front axle profile to a battery box mounted to the frame between the front axle and the rear axle. The handle handlebar, which is a profile substantially perpendicular to the control profile, has grips, a throttle grip, an ignition switch with a key, optionally a light switch, a two-position switch for changing the direction of travel (forward/reverse), and a display, preferably a touch display for displaying parameters such as speed, battery charge status, etc.

Additional equipment of the handle is a display mounted in the control profile between two handlebar grips. The display is preferably a touch display and displays various parameters such as the locker speed, battery charge status, etc. The display is covered from above by a glass with a gasket. The handlebar as a single profile is introduced into a through-hole of the control profile such that on both sides of the control profile, there are two handlebar grips for the user's hands. At one handlebar grip, there is a throttle grip, and at the second grip, there is a two-position switch for switching the forward-reverse travel mode. The electrical power of the locker is activated by turning the key in the ignition switch of the handle control profile. Preferably, on the opposite side of the ignition switch of the control profile, there is a locker light switch. Electrical wires are routed through the handle profiles between the handle and the box.

Additional equipment of the frame according to the first embodiment is a handle braking means, which is preferably a gas strut located between the handle and the profile for positioning the handle relative to the locker. A small plate is welded to the handle from below, which constitutes an arm for mounting the gas strut, and the second end of the gas strut is mounted to the front axle profile. Thanks to the use of the gas strut, the handle has no physical possibility of falling to the ground, rapid falling is eliminated, it is possible to leave it in a set position, and it is impossible to hit the storage part of the riding tack locker.

The locker may also have a steering damper, preferably a gas spring, mounted above the profile to the frame truss and to this profile for damping uncontrolled movements of the profile relative to the frame skeleton. Thanks to the steering damper, if one of the front wheels falls into a depression on the route, the steering damper will block the handle jerk.

In the second embodiment, the front axle has a steering assembly, which is at least one servomechanism, preferably two servomechanisms with arms, wherein each of the servomechanism arms is connected to the second end of the pushrod. While the first ends of the pushrod, similarly to the first embodiment, are connected to the steering knuckle arms. In the riding tack locker box, there is a radio signal receiver, wherein the transmitter signal is collected by an antenna mounted on the outside of the box. In the event of a failure, the user can turn off the power to the drive means via an emergency switch located on one of the truss profiles, such that it can be pressed by hand or foot.

Between the rear axle and the front axle, there is the mentioned box, inside which there is a battery, heating mats, and electronics related to, for example, electric motor control, battery control and monitoring, i.e., a module controlling battery charging and discharging, a Bluetooth module allowing for checking the battery condition and other information about the battery from the level of an application on a phone, and a module controlling the heating mats. The mentioned heating mats are used to raise the temperature in the box and, consequently, allow for charging the battery at temperatures below 0 °C outside. In the box, there is also a receiver for a radio signal sent from a transmitter or a smartphone of the locker in the remotely controlled version, collected by an antenna routed to the outside of this box.

Additional equipment of the frame is lighting, which may be located in the frame truss profiles; preferably, it is mounted in them at an angle to illuminate the surface around the frame. Front and rear lighting mounted on sheet metal elements shielding the front and rear axle is also preferred.

The advantage of the solution is the tack locker frame equipped with a steering assembly that facilitates steering the locker and its guidance over uneven surfaces. The riding tack locker according to the invention enables effortless transport of riding accessories. Its task is also to dampen sudden changes in wheel direction. The construction of the steering axis, which has been integrated with the handle, is non-obvious, providing very high steering precision. The journaling of the handle at the mounting point ensures smooth operation and durability of the mounting, and the use of a gas strut physically eliminates the possibility of the handle falling to the ground and its damage, also eliminates its rapid falling, and furthermore maintains it in a set position, which improves the ergonomics of use. Furthermore, through the use of the gas strut, the handle will never hit the storage part of the riding tack locker. In the extreme upper position, the handle returns to the starting position. Currently used solutions require the user to physically push the object in a given direction, and consequently, this movement rotates the tack wheels. The construction of the front axle provides for the use of a profiled handle for steering the tack locker, which has the possibility of tilting it from its initial vertical position. It is directly connected with the construction of the front axle. Furthermore, the mounting point is journaled on two sides, which allows for smooth vertical movement of the handle. The use of the handle is also a solution for locating all the necessary electronics for controlling the tack locker drive, such as the throttle grip, forward/reverse travel switch, ignition switch with a key, light switch, and display. All these things have been located on the handle. In order to eliminate the situation of dropping the handle on the ground, a gas spring was used. The construction of the front axle has two wheel rotation axes, thanks to which the riding tack locker is characterized by high stability during travel over uneven terrain. This particularly applies to situations in which the wheels will be in their extreme steered positions. The use of a steering damper eliminates vibrations and jerks of the steering system. This has a beneficial effect on the feelings of steering the locker as well as on the durability of all components from which the steering axis is constructed.

Furthermore, to avoid jerks in the control system, a special vibration damper was used. The subject of the solution is characterized by steering precision and guidance stability on uneven surfaces. Through the use of tightly sealed machine bearings, the need for their regular cleaning and grease replenishment was eliminated. The entire construction of the frame and the steering axis, as well as the mounting point of the electric drive, are made of steel profiles and specially designed sheets that have been bent to a set shape. All these elements constitute the entirety of the construction and provide stiffness along its entire length, do not undergo twisting moments during travel over unevenness, and provide high strength in the case of transporting heavy things. The frame construction allows for the installation of a battery with over 100% greater capacity than without interference in the construction located above the frame, the frame itself, and is imperceptible to the naked eye for the recipient of a given product. Constructions known so far do not provide such possibilities and would require redesigning the construction or physically taking space from the usable part of the tack locker for the purpose of battery installation and its housing. The locker is also equipped with many electrical protections intended to increase the safety of using the tack locker. The construction of the steering axis provides for the use of a handle that allows for steering the locker with one hand. In the case of such constructions, which are quite large in size, freeing one hand gives us the possibility of better observation of what is happening around during travel and reacting with the other hand in unforeseen situations. The advantage of the solution is the significant facilitation of transporting and storing all riding equipment. The use of a drive in the electric tack locker facilitates its transport and loading into delivery vans, trucks, or trailers, which very often takes place using ramps with a high slope. The use of the drive not only improves the previously mentioned aspects but also gives the possibility of loading and unloading by one person, even physically weaker. The help of a second person to push the tack locker, which can often weigh more than 100 kg up a steep ramp, is no longer required.

Control can take place using special control equipment or from the level of an application on a phone. The construction of the steering axis is based on servomechanisms, which are characterized by very high torque and fast reaction. This means that the tack locker will be able to turn at any moment and place, regardless of the position of the steering axis wheels or whether they encounter an obstacle in their path. The use of sensors in the form of cameras and ultrasonic distance sensors is primarily intended to increase the safety of use for the user as well as persons in the surroundings. Both the remotely controlled version and the semi-autonomous version are equipped with emergency switches that are easily accessible. Their task is to immediately cut off the power in unforeseen situations and stop the tack locker. The solution has been presented in the drawing, in which individual figures disclose:

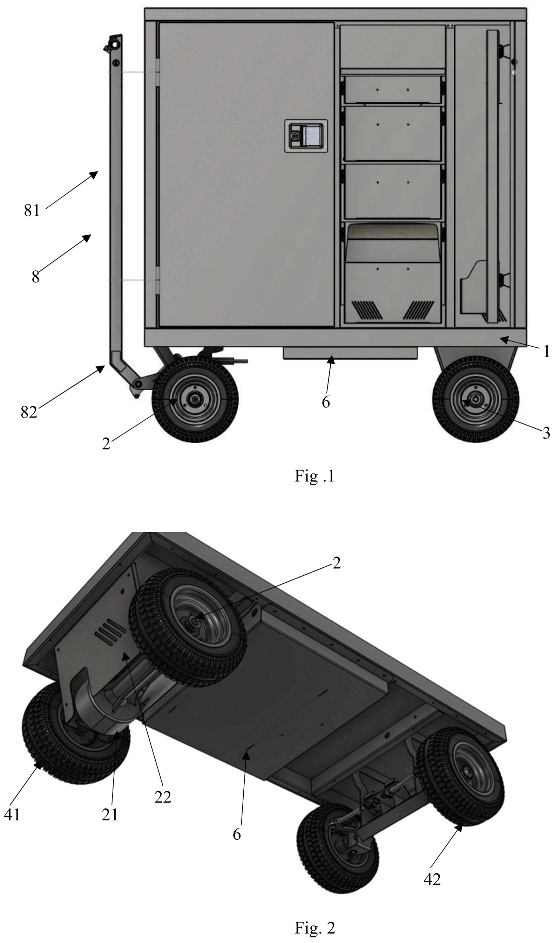

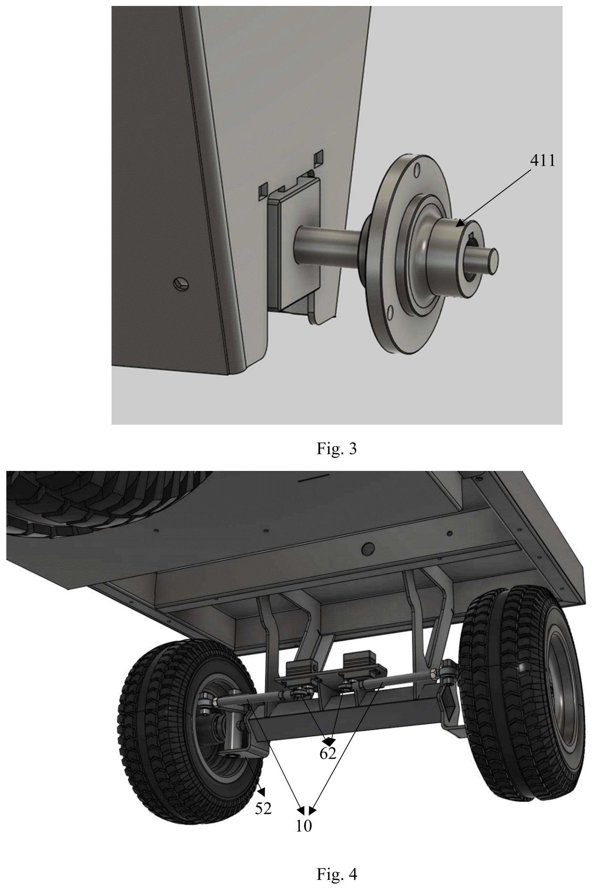

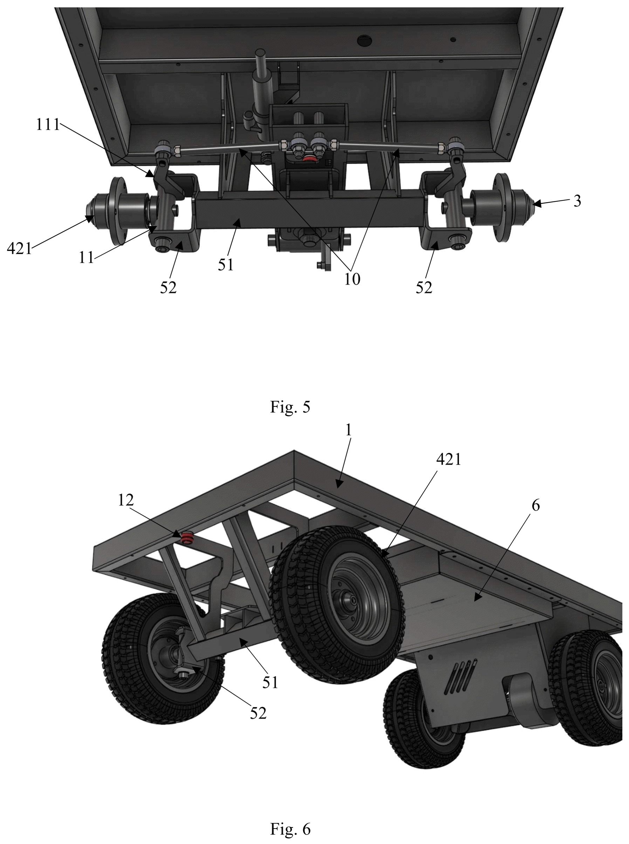

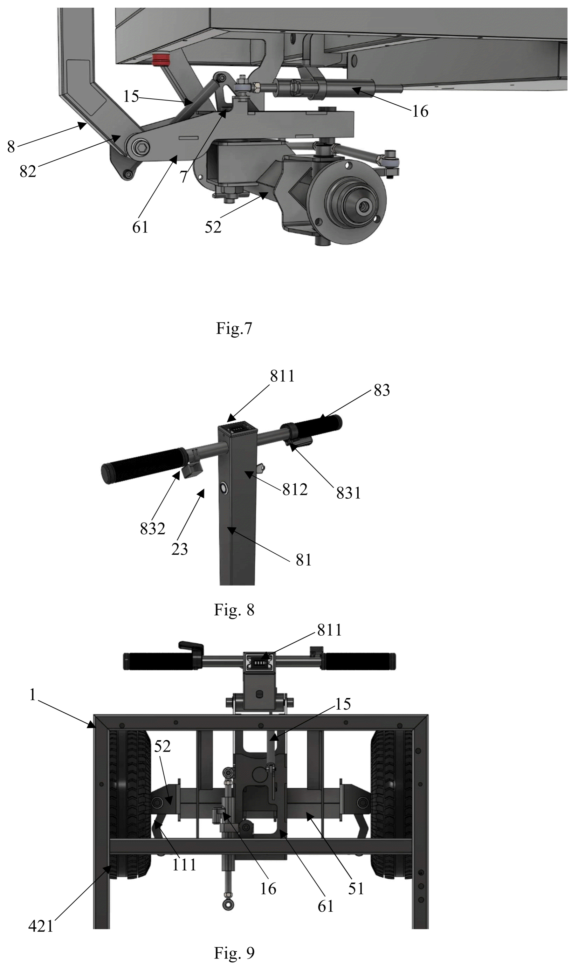

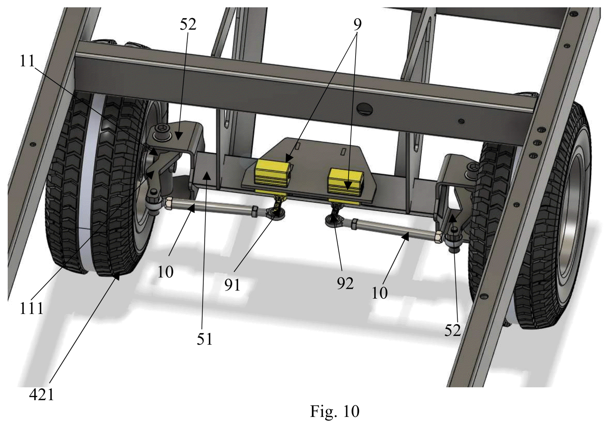

Fig. 1 riding tack locker in a side view, Fig. 2 riding tack locker frame in a bottom view, Fig. 3 front axle shaft with a hub in an isometric view, Fig. 4 front axle in an isometric view according to the first embodiment, Fig. 5 front axle without wheels in an isometric view according to the first embodiment, Fig. 6 locker frame in a front view, Fig. 7 front axle in a side view of the first embodiment, Fig. 8 handle in an isometric view, Fig. 9 handle with the front axle in an isometric view according to the first embodiment, Fig. 10. front axle in an isometric view according to the second embodiment.

The riding tack locker frame is constructed of profiles forming the frame truss 1 of the frame. The frame has a rear axle 2 and a front axle 3. The rear axle 2 comprises an electric motor 21 attached by sheet metal elements 22 to the frame truss 1. Rear hubs 411 for mounting rear wheels 41 are located on both ends of the electric motor 21. At the opposite end of the frame there is the front axle 3, which is constructed as a skeleton 5 comprising, among others, a beam 51 terminated with brackets 52. Steering knuckles 11 are journaled in the brackets 52, and front hubs 421 are mounted to the steering knuckles 11, with front wheels 42 mounted on the front hubs 421.

According to the first embodiment, the front axle 3 also comprises a steering assembly, which is the profile 61 on the skeleton beam, connected to the beam 51 by means of a mounting pin 7. Rotation of the profile 61 with respect to the beam 51 is achieved by a steering means in the form of a handle 8. The handle 8 is constructed of a control profile 81, a connecting profile 82, and a handlebar 83. The handle 8 is journaled in the profile 61. The position of the handle 8 is set by a gas strut 15 connecting the connecting profile 82 of the handle 8 with the profile 61. Between the frame truss 1 and the profile 61 there is a steering damper 16 such that it is mounted both to the truss and to the profile 61. By rotating the handle, the user causes rotation of the profile 61, which in turn transmits this movement through pushrods 10 to steering knuckle arms 111, pulling or pushing the front wheels 42 in the appropriate direction and causing the frame and tack locker to turn. The pushrods 10 are mounted on pins 62 to the profile 61 on the opposite side from the mounting point of the handle to the profile 61. Between the rear axle and the front axle 3 there is a box 6 for the battery and other locker electronics.

Additional equipment of the handle is a display 811 mounted in the control profile 81 between two handlebar grips 83. At one handlebar grip 83 there is a throttle grip 831, and at the other grip there is a two-position switch 832 for switching the forward-reverse travel mode. The electrical power of the locker is activated by turning a key 812 in the ignition switch 813 of the handle control profile 81. Preferably, on the opposite side of the ignition switch of the control profile 81 there is a locker light switch 23. Electrical wires are routed through the handle profiles between the handle and the box 6.

In the second embodiment, the front axle 3 has a steering assembly comprising at least one servomechanism, preferably two servomechanisms with arms, wherein each arm of a servomechanism is connected to the second end of a pushrod. The first ends of the pushrods, similarly to the first embodiment, are connected to the steering knuckle arms 111. In the riding tack locker box 6 there is a receiver of a transmitter signal, the transmitter signal being collected by an antenna mounted to the box 6. In the event of a failure, the user can turn off the power to the drive means 21 via an emergency switch 12 located on one of the truss profiles 1 such that it can be pressed by hand or by foot.

Each of the proposed embodiments can operate in a semi-autonomous version, in which the electric riding tack locker has a control assembly constructed of digital cameras 13 and distance sensors 14 monitoring the area around the locker

## Claims

1. A riding tack locker comprising a storage part consisting of at least one functional compartment for riding equipment, **characterized in that** it comprises a control means, and the storage part is mounted on a frame consisting of interconnected profiles forming a frame truss (1), wherein the frame comprises a rear axle (2) with a drive means (21) and a front axle (3), wherein each of the axles has two wheels (4), referred to as rear wheels (41) and front wheels (42), wherein the front axle (3) of the frame (1) comprising a stationary skeleton (5) and a wheel steering assembly transmitting a rotation signal of the front wheels (42) from the locker control means to pushrods (10) of the front axle (3), wherein the stationary skeleton (5) is constructed of a set of profiles interconnected with each other and with the frame truss (1) forming a supporting structure of the front axle (3), while one end of each pushrod (10) is pivotally connected to a steering knuckle arm (111) on which front hubs (421) of the front wheels (42) are mounted, and the second end of each pushrod (10) is pivotally connected to the steering assembly.

2. The riding tack locker according to claim 1, **characterized in that** the steering assembly is a profile (61) on a beam (51) of the skeleton (5) located between the front wheels (42) of the front axle (3) such that the profile (61) is connected to the beam (51) by means of a mounting pin (7) journaled in at least one place between the skeleton and the profile (61).

3. The riding tack locker according to claim 1, **characterized in that** the control means is a handle (8) journaled in the profile (61) of the front axle.

4. The riding tack locker according to claim 1 or 3, **characterized in that** the frame handle (8) is a profile constructed of at least two interconnected elements, referred to as a control profile (81) and a connecting profile (82), and a handlebar (83) such that the connecting profile constitutes a link between the control profile and the profile (61).

5. The riding tack locker according to claim 1 or 3, or 4, **characterized in that** between the connecting profile (82) and the control profile (81), there is at least a right angle, preferably an obtuse angle.

6. The riding tack locker according to claim 2 or 3 or 4 or 5, **characterized in that** the second ends of the pushrods (10) are journaled on pins (62) of the profile (61).

7. The riding tack locker according to claim 2 or 3 or 4 or 5 or 6, **characterized in that** the frame comprising a handle braking means (15), where said braking means preferably being a gas strut between the handle and the profile (61) for positioning the handle relative to the tack locker.

8. The riding tack locker according to claim 2 or 3 or 4 or 5 or 6 or 7, **characterized in that** it has a steering damper (16), preferably a gas spring, mounted above the profile (61) to the frame truss (1) and to this profile (61) for damping uncontrolled movements of the profile (61) relative to the frame skeleton (5).

9. The riding tack locker according to claim 1, **characterized in that** the steering assembly is at least one servomechanism (9), preferably two servomechanisms with arms (91, 92), wherein each of the servomechanism arms is connected to the second end of the pushrod (10).

10. The riding tack locker according to claim 9, **characterized in that** it has a receiver and a radio signal receiving antenna, preferably of a transmitter, preferably a smartphone application.

11. The riding tack locker according to claim 9 or 10, **characterized in that** it has a reusable emergency switch (12) in the frame for disconnecting power from the rear axle (2) drive means.

12. The riding tack locker according to claim 1 or 2 or 3 or 4 or 5 or 6 or 7 or 8 or 9 or 10 or 11, **characterized in that** it has a control assembly constructed of digital cameras (13) and distance sensors (14).

13. The riding tack locker according to claim 1 or 2 or 3 or 4 or 5 or 6 or 7 or 8 or 9 or 10 or 11 or 12, **characterized in that** each of the front axle steering knuckles (11) is journaled in at least one place of a bracket (52) of the skeleton (5) beam (51).

14. The riding tack locker according to claim 1 or 2 or 3 or 4 or 5 or 6 or 7 or 8 or 9 or 10 or 11 or 12 or 13, **characterized in that** between the rear axle (2) and the front axle (3), there is a box (6) for additional accessories, preferably for a battery, heating mats, electronic means controlling the drive operation, a receiver, an antenna.

15. The riding tack locker according to claim 1 or 2 or 3 or 4 or 5 or 6 or 7 or 8 or 9 or 10 or 11 or 12 or 13 or 14, **characterized in that** lighting (23) for illuminating the surroundings of the frame is located in the frame truss (1) profiles.

16. The riding tack locker according to claim 1 or 2 or 3 or 4 or 5 or 6 or 7 or 8 or 9 or 10 or 11 or 12 or 13 or 14, **characterized in that** front and rear lighting is located on sheet metal elements shielding the front and rear axle.
